# FASCICULE DE BREVET EUROPEEN

(11) **EP 3 728 338 B1**
(45) Date de publication et mention de la délivrance du brevet: **06.09.2023**
(21) Numéro de dépôt: 18796719.5
(22) Date de dépôt: 11.10.2018
(51) Int. Cl.: B60C 1/00, C08C 19/22, C08K 3/04, C08L 9/00, C08L 15/00

(54) **COMPOSITION DE CAOUTCHOUC**
KAUTSCHUKZUSAMMENSETZUNG
RUBBER COMPOSITION

(30) Priorité: 20.12.2017 FR 1762562
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: SALIT, Anne-Frédérique, 63040 CLERMONT-FERRAND Cedex 9 (FR); THUILLIEZ, Anne-Lise, 63040 CLERMONT-FERRAND Cedex 9 (FR); LEDOUX, Céline, 63040 CLERMONT-FERRAND Cedex 9 (FR)
(74) Mandataire: Gandon-Pain, Sylvie
(86) Numéro de dépôt international: PCT/FR2018/052521
(87) Numéro de publication internationale: WO 2019/122547

(56) Documents cités:
- WO-A1-2015/059269
- WO-A1-2015/059271
- WO-A1-2015/059274
- WO-A1-2017/089708

## Description

La présente invention concerne les compositions de caoutchouc diéniques renforcées majoritairement par du noir de carbone destinées à être utilisées en particulier dans un pneumatique.

Le caoutchouc naturel reste encore un élastomère diénique largement utilisé dans les compositions de caoutchouc, même si depuis plusieurs décennies il a été partiellement remplacé dans des compositions de caoutchouc par des élastomères diéniques de synthèse comme le polybutadiène, le polyisoprène de synthèse et les copolymères de butadiène et de styrène. Comme la production du caoutchouc naturel peut fortement varier en fonction des aléas climatiques ou géopolitiques, il peut être stratégique de vouloir minimiser tout impact d'une variation brutale de la production du caoutchouc naturel sur la fabrication d'articles de caoutchouc. Cependant le remplacement du caoutchouc naturel par un élastomère de synthèse dans une composition de caoutchouc renforcée majoritairement par du noir de carbone s'accompagne d'une diminution des propriétés de résistance mécanique à l'état cru de la composition de caoutchouc. Or, ces propriétés de résistance mécanique à l'état cru, c'est à dire avant réticulation, sont généralement importantes dans les opérations d'assemblage de composants caoutchouteux multiples qui sont encore à l'état cru, comme par exemple dans la fabrication d'un pneumatique. Une résistance mécanique élevée à l'état cru des compositions de caoutchouc constitutives des composants caoutchouteux de l'assemblage permet de garantir la stabilité dimensionnelle de l'assemblage, notamment en évitant le fluage des composants caoutchouteux. Une résistance mécanique élevée à l'état cru d'une composition de caoutchouc permet aussi de maintenir l'écart de fil dans des tissus, composants caoutchouteux comprenant des éléments de renforcement filaires, par exemple textiles ou métalliques, enrobés dans la composition de caoutchouc.

Le document WO 2015/059271 A1 décrit des compositions de caoutchouc vulcanisables comprenant majoritairement une charge inorganique renforçante et un élastomère diénique portant des fonctions imidazole. Les compositions de caoutchouc décrites sont destinées à être utilisées dans une bande de roulement pour pneumatique en vue de réduire la résistance au roulement du pneumatique sans détériorer le comportement routier.

La Demanderesse a découvert de façon surprenante qu'une composition de caoutchouc renforcée majoritairement par du noir de carbone et comprenant un élastomère à la fois fonctionnel et stéréorégulier pouvait se substituer à une composition de caoutchouc renforcée majoritairement par un noir de carbone et comprenant du caoutchouc naturel, sans être au détriment des bonnes propriétés de résistance mécanique à l'état cru.

Ainsi, un premier objet de l'invention est une composition de caoutchouc à base au moins :
- d'un élastomère fonctionnel, lequel élastomère fonctionnel est un élastomère diénique qui comprend des unités diéniques sous la configuration 1,4-cis et des groupes pendants de formule (I) 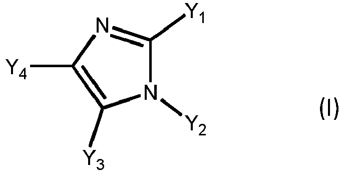 dans laquelle :
   les symboles Y₁, Y₂, Y₃ et Y₄, identiques ou différents, représentent un atome ou un groupe d'atomes sachant qu'au moins un des symboles désigne un rattachement à une unité diénique de l'élastomère,
   les unités diéniques sous la configuration 1,4-cis représentant au moins 90% en mole des unités diéniques de l'élastomère fonctionnel,
- d'une charge renforçante qui comprend un noir de carbone, le noir de carbone représentant plus de 50% en masse de la charge renforçante.

Un deuxième objet de l'invention est un composite comportant une composition de caoutchouc conforme à l'invention et au moins un élément de renforcement enrobé dans la composition de caoutchouc.

Un troisième objet de l'invention est un article semi-fini pour pneumatique comportant une composition de caoutchouc conforme à l'invention ou un composite conforme à l'invention, lequel article semi-fini est une armature de renforcement pour pneumatique.

Un quatrième objet de l'invention est un pneumatique comprenant une composition de caoutchouc conforme à l'invention, un composite conforme à l'invention ou un article semi-fini conforme à l'invention.

Il est aussi décrit un procédé de fabrication d'une composition de caoutchouc conforme à l'invention.

### 1. DESCRIPTION DETAILLEE DE L'INVENTION

L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

L'élastomère fonctionnel utile aux besoins de l'invention est un élastomère diénique. Par élastomère diénique, on entend un élastomère qui comprend des unités diéniques. Par unité diénique, on entend une unité qui contient une double liaison carbone carbone et qui résulte de l'insertion d'un monomère diène dans une chaîne en croissance au cours de la réaction de polymérisation. L'élastomère fonctionnel a la particularité d'avoir des unités diéniques sous la configuration 1,4 cis. Ces unités diéniques sous la configuration 1,4-cis sont bien connues de l'homme du métier : elles résultent d'une insertion particulière d'un diène conjugué dans la chaîne polymère en croissance au cours de la réaction de polymérisation. Les unités diéniques sous la configuration 1,4 cis, également appelées unités 1,4-cis, représentent au moins 90% en mole des unités diéniques de l'élastomère fonctionnel. Ce taux d'unité 1,4-cis dans l'élastomère fonctionnel correspond à un taux de stéréorégularité supérieur ou égal à 90%. De préférence, les unités 1,4-cis représentent au moins 95% en mole des unités diéniques de l'élastomère fonctionnel, ce qui correspond à un taux de stéréorégularité supérieur ou égal à 95%. Avantageusement, les unités diéniques de l'élastomère fonctionnel sous la configuration 1,4-cis représentent plus de 90% en moles des unités de répétition constitutives (en anglais « constitutional repeating unit », également désignée sous l'abréviation CRU par IUPAC) de l'élastomère fonctionnel.

De préférence, les unités diéniques de l'élastomère fonctionnel sont des unités du 1,3-butadiène ou des unités de l'isoprène.

L'élastomère fonctionnel utile aux besoins de l'invention a aussi pour autre particularité de porter des groupes fonctionnels. Les groupes fonctionnels sont des groupes pendants de formule (I).

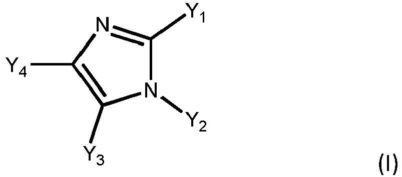

Dans la formule (I), les symboles Y₁, Y₂, Y₃ et Y₄ , identiques ou différents, représentent un atome ou un groupe d'atomes sachant qu'au moins un des symboles désigne un rattachement à une unité diénique de l'élastomère. Dans la présente demande, on entend par groupe d'atomes un enchaînement d'atomes liés de façon covalente pour constituer une chaîne. L'homme du métier comprend que les groupes fonctionnels sont rattachés à l'élastomère par liaison covalente. Selon l'un quelconque des modes de réalisation de l'invention, de préférence un seul symbole désigne un rattachement à une unité diénique de l'élastomère. Le rattachement à une unité diénique peut être direct ou indirect, c'est-à-dire par l'intermédiaire d'un groupe d'atomes. Il est de préférence indirect.

Lorsque ni Y₃, ni Y₄ ne désignent un rattachement à une unité diénique, Y₃ et Y₄ peuvent former avec les deux atomes de carbone auxquels ils se rattachent un cycle, en particulier aromatique.

Selon un mode de réalisation préférentiel de l'invention, le symbole Y₂ désigne le rattachement à une unité diénique de l'élastomère.

Selon un autre mode de réalisation préférentiel de l'invention, les symboles Y₃ et Y₄ sont chacun un atome d'hydrogène et le symbole Y₁ représente un atome d'hydrogène ou une chaîne carbonée pouvant contenir au moins un hétéroatome. Dans la présente demande, on entend par chaîne carbonée une chaîne qui contient un ou plusieurs atomes de carbone.

Selon un mode de réalisation tout particulièrement préférentiel, le symbole Y₂ désigne le rattachement à une unité diénique de l'élastomère, les symboles Y₃ et Y₄ sont chacun un atome d'hydrogène et le symbole Y₁ représente un atome d'hydrogène ou une chaîne carbonée pouvant contenir au moins un hétéroatome.

Avantageusement, Y₁ est un atome d'hydrogène ou un groupe alkyle. Lorsque le symbole Y₁ représente un groupe alkyle, le groupe alkyle est préférentiellement un alkyle en C₁-C₆, plus préférentiellement un méthyle. On entend par alkyle en C₁-C₆ un alkyle qui contient de 1 à 6 atomes de carbone.

Selon l'un quelconque des modes de réalisation de l'invention, les groupes pendants de formule (I) sont de préférence répartis de façon aléatoire le long de la chaîne élastomère.

La teneur molaire en groupes pendants de formule (I) dans l'élastomère fonctionnel est préférentiellement d'au plus 3% molaire pour minimiser le surcoût de l'élastomère fonctionnel par rapport à un élastomère non fonctionnel. Elle varie préférentiellement dans un domaine qui va de plus de 0% à 3% en mole des unités de répétition constitutives de l'élastomère fonctionnel, par exemple de 0.02% à 3% en mole des unités de répétition constitutives de l'élastomère fonctionnel, encore plus préférentiellement de 0.1% à 3% en mole des unités de répétition constitutives de l'élastomère fonctionnel. Ces plages préférentielles peuvent s'appliquer à l'un quelconque des modes de réalisation de l'invention.

Selon un mode de réalisation particulier de l'invention, l'élastomère fonctionnel peut être un mélange de plusieurs élastomères qui peuvent se différencier les uns des autres par leur microstructure et leur macrostructure. Chacun des élastomères composant le mélange répond à la définition de l'élastomère fonctionnel utile aux besoins de l'invention tant du point de vue de la stéréorégularité que de la fonctionnalisation.

Selon l'un quelconque des modes de réalisation de l'invention, l'élastomère fonctionnel est préférentiellement différent d'un caoutchouc naturel modifié. En particulier il est obtenu préférentiellement par modification d'un élastomère diénique de synthèse.

Selon un mode de réalisation particulièrement préférentiel de l'invention, l'élastomère fonctionnel est un élastomère diénique dont une partie des unités diéniques sont modifiées par greffage d'un composé, composé C, qui contient un groupe réactif vis-à-vis de doubles liaisons carbone carbone et un groupe de formule (II) dans laquelle les symboles Z₁, Z₂, Z₃ et Z₄, identiques ou différents, représentent un atome ou un groupe d'atomes sachant qu'au moins un des symboles désigne un rattachement au groupe réactif. De préférence, un seul symbole désigne un rattachement au groupe réactif.

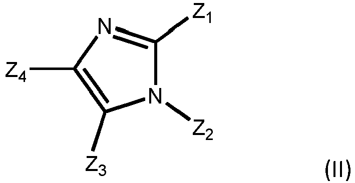

Lorsque ni Z₃, ni Z₄ ne désignent un rattachement au groupe réactif, Z₃ et Z₄ peuvent former avec les deux atomes de carbone auxquels ils se rattachent un cycle, en particulier aromatique.

Dans la formule (II), le symbole Z₂ désigne de préférence le rattachement au groupe réactif. De préférence, les symboles Z₃ et Z₄ représentent chacun un atome d'hydrogène et le symbole Z₁ représente un atome d'hydrogène ou une chaîne carbonée pouvant contenir au moins un hétéroatome, en particulier un alkyle, plus particulièrement un alkyle en C₁-C₆. Avantageusement le groupe alkyle représenté par Z₁ est un méthyle.

Autrement dit, l'élastomère fonctionnel est, selon ce mode de réalisation particulièrement préférentiel de l'invention, un élastomère diénique modifié qui est obtenu par modification d'un élastomère diénique de départ par une réaction de greffage du composé C. De préférence, l'élastomère fonctionnel est obtenu par modification d'un élastomère diénique de synthèse. Autrement dit, l'élastomère diénique de départ est préférentiellement un élastomère diénique de synthèse. Il est communément admis que le caoutchouc naturel n'est pas un élastomère diénique de synthèse, puisqu'il est extrait de l'hévéa. A titre d'élastomère diénique de synthèse qui convient tout particulièrement, on peut citer un polybutadiène ou un polyisoprène de synthèse. L'homme du métier comprend que le polybutadiène et le polyisoprène en tant qu'élastomère diénique de départ, présentent typiquement une stéréorégularité voisine de celle de l'élastomère fonctionnel, en particulier une teneur en unité 1,4-cis supérieure ou égale à 90%, préférentiellement supérieure ou égale à 95%.

Selon ce mode de réalisation particulièrement préférentiel de l'invention, l'élastomère fonctionnel comporte à la fois des unités diéniques et des unités diéniques modifiées par le greffage du composé C. De préférence, les unités de répétition constitutives de l'élastomère fonctionnel sont les unités diéniques et les unités diéniques modifiées par le greffage du composé C. Autrement dit, préférentiellement il n'y a pas dans l'élastomère fonctionnel d'autres unités que les unités diéniques et les unités diéniques modifiées qui portent le groupe de formule (I).

De préférence, le composé C est un composé 1,3-dipolaire. Le terme composé 1,3-dipolaire est compris selon la définition donnée par IUPAC. Il a pour caractéristique de comprendre un seul dipôle et le groupe de formule (II). Le dipôle constitue le groupe réactif du composé C vis-à-vis de doubles liaisons carbone carbone. Le dipôle réagit typiquement avec les doubles liaisons carbone carbone d'unités diéniques. La mise en présence de l'élastomère diénique de départ et du composé C conduit à la modification d'une partie des unités diéniques de l'élastomère diénique de départ. Le composé 1,3-dipolaire utile aux besoins de l'invention est de préférence un monooxyde de nitrile aromatique. On entend par composé monooxyde de nitrile aromatique un composé aromatique qui contient un seul dipôle oxyde de nitrile et dans lequel le noyau benzénique est substitué par le dipôle oxyde de nitrile, ce qui signifie que l'atome de carbone du dipôle est lié directement par une liaison covalente à un atome de carbone du noyau benzénique. Avantageusement, le noyau benzénique est substitué en ortho du dipôle.

Avantageusement, le composé 1,3-dipolaire contient un motif de formule (III) dans laquelle quatre des six symboles R₁ à R₆, identiques ou différents, sont chacun un atome ou un groupe d'atomes, sachant que le cinquième symbole représente un rattachement au groupe de formule (II) et le sixième symbole un rattachement direct au dipôle.

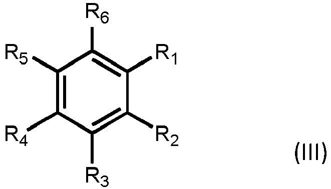

Dans la formule (III), les symboles R₁ et R₅ sont de préférence tous les deux différents d'un atome d'hydrogène, ce qui permet de conférer une plus grande stabilité du composé 1,3-dipolaire et ainsi une utilisation plus aisée du composé 1,3-dipolaire.

Dans la formule (III), les symboles R₁, R₃ et R₅ représentent chacun de préférence un groupe hydrocarboné, de manière plus préférentielle alkyle, de manière encore plus préférentielle méthyle ou éthyle.

Dans la formule (III), les symboles R₂ et R₄ sont préférentiellement chacun un atome d'hydrogène.

Dans la formule (III), les symboles R₁, R₃ et R₅ représentent chacun de préférence un groupe hydrocarboné, de manière plus préférentielle alkyle, de manière encore plus préférentielle méthyle ou éthyle et les symboles R₂ et R₄ sont préférentiellement chacun un atome d'hydrogène. Avec un noyau benzénique ainsi substitué, la synthèse du composé 1,3-dipolaire peut alors être réalisée à partir d'une voie de synthèse relativement aisée à partir d'un précurseur commercialement disponible, par exemple le mésitylène, comme cela est décrit notamment dans le documents WO 2015059269.

Dans la formule (III), le cinquième symbole est rattaché au groupe de formule (II) de préférence par l'intermédiaire d'un groupe d'atomes dit espaceur. L'espaceur est de préférence une chaîne carbonée pouvant contenir au moins un hétéroatome. L'espaceur contient de préférence 1 à 6 atomes de carbone, en particulier 1 à 3 atomes de carbone. L'espaceur est plus préférentiellement un groupe alcanediyle, mieux méthanediyle.

Selon l'un quelconque des modes de réalisation de l'invention, le composé 1,3-dipolaire est avantageusement le composé 2,4,6-triméthyl-3-((2-méthyl-1*H*-imidazol-1-yl)méthyl)benzo-nitrile oxyde de formule (III-a) ou le composé 2,4,6-triéthyl-3-((2-méthyl-1H-imidazol-1-yl)méthyl)benzo-nitrile oxyde de formule (III-b), plus avantageusement le composé de formule (III-a) .

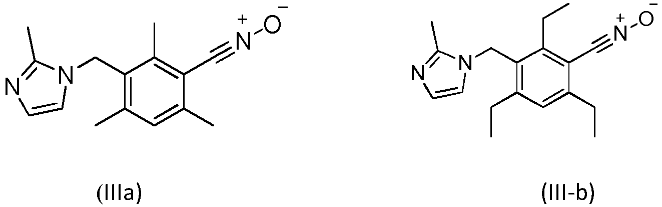

La charge renforçante utile aux besoins de l'invention a pour caractéristique essentielle de comprendre un noir de carbone, lequel noir de carbone représente plus de 50% en masse de la charge renforçante. Comme noirs de carbone conviennent tous les noirs de carbone, notamment les noirs conventionnellement utilisés dans les pneumatiques, notamment dans les armatures de renforcement comme les armatures de carcasse ou les armatures de sommet. On peut citer tout particulièrement les grades ASTM des séries 300 à 700, ou alternativement les grades HAF, FF, FEF, GPF et SRF.

De préférence, le noir de carbone représente plus de 90% en masse de la charge renforçante. Le noir de carbone peut aussi constituer la totalité de la charge renforçante pour l'un quelconque des modes de réalisation de l'invention.

Le taux de noir de carbone dans la composition de caoutchouc peut varier dans une large mesure. Il est ajusté en fonction de l'usage à laquelle est destinée la composition de caoutchouc, notamment dans un pneumatique. Lorsque la composition de caoutchouc est destinée à former une armature de renforcement pour un pneumatique, le taux de noir de carbone est préférentiellement compris dans un domaine allant de 30 à 80 pce. Un taux inférieur à 30 pce peut conduire à un renforcement de la composition de caoutchouc après réticulation qui peut être jugé insuffisant pour une utilisation dans un composite qui comporte au moins un élément de renforcement, par exemple dans une armature de renforcement pour pneumatique. Un taux supérieur à 80 pce peut s'accompagner d'un niveau de rigidité qui peut être considéré comme trop élevé pour une utilisation dans une armature de renforcement.

La composition de caoutchouc conforme à l'invention peut comporter également tout ou partie des additifs usuels habituellement utilisés dans les compositions. La composition de caoutchouc peut notamment comporter un élastomère autre que l'élastomère fonctionnel. En particulier, cet autre élastomère peut être un élastomère non modifié, par exemple l'élastomère de départ utilisé dans la préparation de l'élastomère fonctionnel. Cet autre élastomère peut être aussi un caoutchouc naturel. Le taux de l'élastomère fonctionnel dans la composition de caoutchouc conforme à l'invention est préférentiellement d'au moins 50 pce, plus préférentiellement d'au moins 75 pce, encore plus préférentiellement d'au moins 90 pce. Le taux d'élastomère fonctionnel dans la composition de caoutchouc varie donc préférentiellement de 50 à 100 pce, plus préférentiellement de 75 à 100 pce, encore plus préférentiellement de 90 à 100 pce. Ces taux préférentiels d'élastomère fonctionnel dans la composition de caoutchouc peuvent s'appliquer à l'un quelconque des modes de réalisation de l'invention.

La composition de caoutchouc peut contenir un système de réticulation de l'élastomère. Le système de réticulation peut être un système de vulcanisation ou être à base d'un ou plusieurs composés peroxydes, par exemple conventionnellement utilisés dans les compositions de caoutchouc utilisables pour la fabrication de pneumatique. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce.

Lorsque la composition de caoutchouc est destinée à être utilisée dans un composite qui comporte au moins un élément de renforcement métallique, la composition de caoutchouc contient du soufre, préférentiellement à un taux qui peut être supérieur à 2 pce et peut atteindre jusqu'à 8.5 pce, de préférence de 3.5 à 7 pce. Dans les compositions de caoutchouc destinées à être mises en contact avec au moins un élément de renforcement métallique dont la surface est laitonnée, une partie du soufre est consommée dans la formation d'une interface d'accrochage entre la composition de caoutchouc et le métal. Aussi, le soufre est-il présent dans de telles compositions de caoutchouc destinées à la préparation de composites ou couches adjacentes à ces composites, dans des proportions supérieures à celles habituellement utilisées dans d'autres compositions, par exemple pour bandes de roulement.

La composition de caoutchouc peut contenir en outre d'autres additifs connus pour être utilisés dans des compositions de caoutchouc pour pneumatiques, tels que des pigments, des agents de mise en oeuvre, des anti-ozonants, des antioxydants, des systèmes promoteurs d'adhésion vis-à-vis de renforts métalliques notamment laitonnés, comme par exemple des sels métalliques tels que des sels organiques de cobalt ou de nickel. L'homme du métier saura ajuster la formulation de la composition en fonction de ses besoins particuliers.

Lorsque la composition de caoutchouc est destinée à être utilisée dans un composite qui comporte au moins un élément de renforcement métallique, la composition de caoutchouc peut comporter en outre au moins un promoteur d'adhésion, de préférence un composé de cobalt. Ce composé de cobalt est préférentiellement un composé organique de cobalt, typiquement choisi parmi les carboxylates de cobalt, composés bien connus pour être utilisés comme promoteur d'adhésion. Son taux dans la composition de caoutchouc est préférentiellement compris entre 0.1 et 10 pce, plus préférentiellement entre 0.3 et 6 pce, en particulier entre 0.5 et 4 pce.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc selon un mode de réalisation particulier de l'invention peut être fabriquée selon un procédé qui comprend les étapes suivantes :
- au cours d'une première étape dite non productive malaxer un élastomère diénique de départ ayant une teneur molaire en unité 1,4-cis supérieure ou égale à 90%, préférentiellement supérieure ou égale à 95%, et un composé C en malaxant thermo-mécaniquement, le composé C étant tel que défini précédemment,
- ajouter ensuite la charge renforçante, le cas échéant les autres ingrédients de la composition de caoutchouc à l'exception du système de réticulation en malaxant thermo-mécaniquement jusqu'à atteindre une température maximale comprise entre 130 et 200°C,
- refroidir l'ensemble à une température inférieure à 100°C,
- incorporer ensuite le système de réticulation,
- malaxer le tout jusqu'à une température maximale inférieure à 120°C.

La composition finale ainsi obtenue peut ensuite être calandrée, par exemple sous la forme d'une feuille, d'une plaque ou encore extrudée, par exemple pour former un profilé de caoutchouc utilisé pour la fabrication d'un composite ou d'un produit semi-fini, tel que par exemple une armature de renforcement pour pneumatique.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique, autre objet de l'invention.

Selon un mode de réalisation particulier de l'invention, la composition de caoutchouc est utilisée dans un composite, autre objet de l'invention. Le composite conforme à l'invention a aussi pour autre caractéristique essentielle de comporter au moins un élément de renforcement enrobé dans la composition de caoutchouc définie selon l'un quelconque des modes de réalisation de l'invention. Le composite peut être fabriqué par un procédé qui comprend les étapes suivantes : réaliser deux couches de la composition de caoutchouc, prendre chaque élément de renforcement en sandwich dans les deux couches en le déposant entre les deux couches, et le cas échéant réticuler l'élastomère fonctionnel, en particulier par vulcanisation. La réalisation des couches peut se faire par calandrage.

L'élément de renforcement, également dénommé renfort, peut être métallique ou textile. Dans la présente demande, on entend par textile de manière bien connue de l'homme du métier tout matériau en matière autre que métallique, qu'elle soit naturelle comme synthétique, susceptible d'être transformée en fil, fibre ou film par tout procédé de transformation approprié. On peut citer par exemple, sans que les exemples ci-après soient limitatifs, un procédé de filage de polymère tel que par exemple filage au fondu, filage en solution ou filage de gel. Le renfort textile peut être en matière polymérique, du type thermoplastique comme non thermoplastique, d'origine naturelle ou synthétique. Tout renfort textile connu pour pouvoir être utilisé dans une armature de renforcement pour pneumatique convient.

Le renfort peut se présenter sous différentes formes, préférentiellement sous la forme d'un fil unitaire (monofil) ou d'un assemblage de fils, que ces fils soient tordus entre eux (par exemple, sous la forme d'un câble) ou essentiellement parallèles entre eux. Le renfort se présente plus préférentiellement sous la forme d'un fil unitaire ou d'un assemblage de fils, par exemple d'un câble ou d'un toron fabriqué avec des dispositifs et procédés de câblage ou toronnage connus de l'homme du métier, qui ne sont pas décrits ici pour la simplicité de l'exposé. Le renfort peut aussi se présenter sous la forme d'un ruban ou film ou également d'un tissu réalisé à partir de fils ou fibres, par exemple d'un tissu tramé avec fils de chaîne et fils de trame, ou encore d'un tissu croisé avec fils croisés. Par « fil » ou « fibre », on entend de manière générale tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé. La plus grande dimension de sa section transversale est préférentiellement inférieure à 5 mm, plus préférentiellement inférieur à 3 mm. Par « film » ou « ruban », on entend de manière générale un élément longiligne, de grande longueur relativement à sa section transversale, dont la section transversale présente un rapport de forme (largeur sur épaisseur) supérieur à 5, de préférence supérieur à 10, et dont la largeur est préférentiellement au moins égale à 3 mm, plus préférentiellement au moins égale à 5 mm.

Lorsqu'un renfort métallique est utilisé, on utilise de préférence un renfort en acier, en particulier en acier perlitique (ou ferrito-perlitique) au carbone dénommé de manière connue "acier au carbone", ou encore en acier inoxydable tels que décrits par exemple dans les demandes de brevet EP-A-648 891 ou WO98/41682. Mais il est bien entendu possible d'utiliser d'autres aciers ou d'autres alliages. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Lorsque les composites de l'invention sont utilisés pour renforcer des armatures de carcasse ou de sommet de pneumatiques radiaux, les renforts utilisés sont de préférence des assemblages (torons ou câbles) de fils fins en acier au carbone ou en acier inoxydable ayant :
- une résistance en traction supérieure à 2000 MPa, plus préférentiellement supérieure à 2500 MPa, en particulier supérieure à 3000 MPa ; l'homme du métier sait comment fabriquer des fils fins présentant une telle résistance, en ajustant notamment la composition de l'acier et les taux d'écrouissage final de ces fils ;
- pour un bon compromis résistance/tenue en flexion/faisabilité, un diamètre compris entre 0.10 et 0.40 mm, plus préférentiellement entre 0.10 et 0.30 mm environ lorsque le composite est destiné à renforcer une armature de carcasse, entre 0.20 et 0.40 mm environ lorsque le composite est destiné à renforcer une armature de sommet.

Le composite peut être utilisé dans un article semi-fini tel qu'une armature de renforcement pour pneumatique.

Selon l'invention, l'article semi-fini pour pneumatique est une armature de renforcement pour pneumatique. L'armature de renforcement pour pneumatique est de préférence une armature de carcasse ou une armature de sommet.

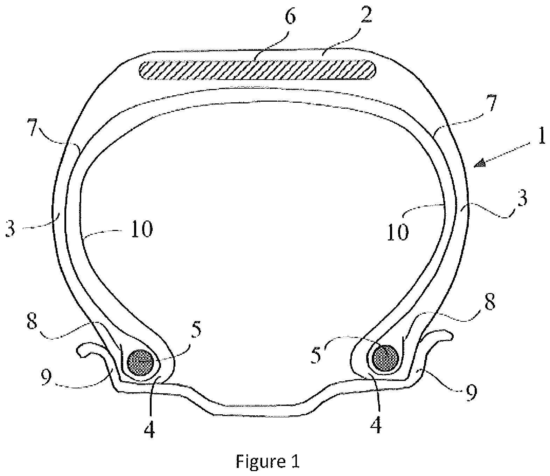

A titre d'exemple, la figure 1 représente de manière schématique une coupe radiale d'un pneumatique 1 à armature de carcasse radiale conforme à l'invention. Le pneumatique 1 comporte un sommet 2, deux flancs 3, deux bourrelets 4, une armature de carcasse 7 s'étendant d'un bourrelet à l'autre. Le sommet 2, surmonté d'une bande de roulement (non représentée sur cette figure schématique, pour simplification), est de manière connue en soi renforcé par une armature de sommet 6 constituée par exemple d'au moins deux nappes sommet croisées superposées (nappes sommet dites "de travail"). L'armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est constituée d'au moins une nappe renforcée par des câbles dits "radiaux", c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Bien entendu, ce pneumatique 1 comporte en outre de manière connue une couche de gomme ou élastomère 10, communément appelée gomme ou couche d'étanchéité, qui définit la face radialement interne du pneumatique et qui est destinée à protéger la nappe de carcasse de la diffusion d'air provenant de l'espace intérieur au pneumatique. Avantageusement, en particulier dans le cas d'un pneumatique pour véhicule Poids-lourd, il peut comporter en outre une couche élastomère intermédiaire de renforcement (non représentée sur la figure) qui est située entre la nappe de carcasse et la couche d'étanchéité.

L'invention concerne la composition de caoutchouc, le composite, l'article semi-fini et le pneumatique à l'état cru (avant réticulation de l'élastomère) ou à l'état cuit (après réticulation de l'élastomère). Généralement, au cours de la fabrication du pneumatique, le composite ou l'article semi-fini est déposé à l'état cru (c'est-à-dire avant réticulation de l'élastomère) dans la structure du pneumatique avant l'étape de cuisson du pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :

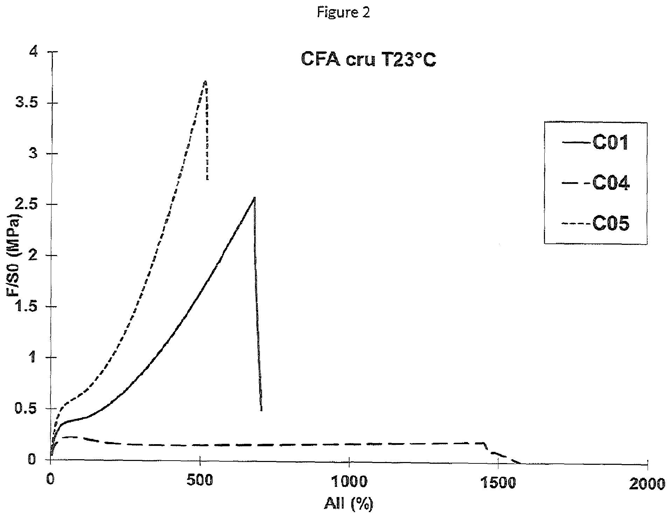

- La figure 2 est un graphique des courbes de contrainte apparente F/So (MPa) en fonction de la déformation (%) relatives à des éprouvettes non réticulées (courbe force allongement à cru ou cfa à cru) qui ont été obtenues selon la méthode décrite dans le paragraphe II.1 et qui sont respectivement constituées :
   i. de composition de caoutchouc de l'état de la technique (C01), l'élastomère étant le caoutchouc naturel,
   ii. de composition de caoutchouc non conforme à l'invention (C04), l'élastomère étant un polyisoprène stéréorégulier dépourvu de groupes pendants de formule (I),
   iii. de composition de caoutchouc conforme à l'invention (C05), l'élastomère étant un polyisoprène stéréorégulier et porteur de groupes pendants de formule (I).

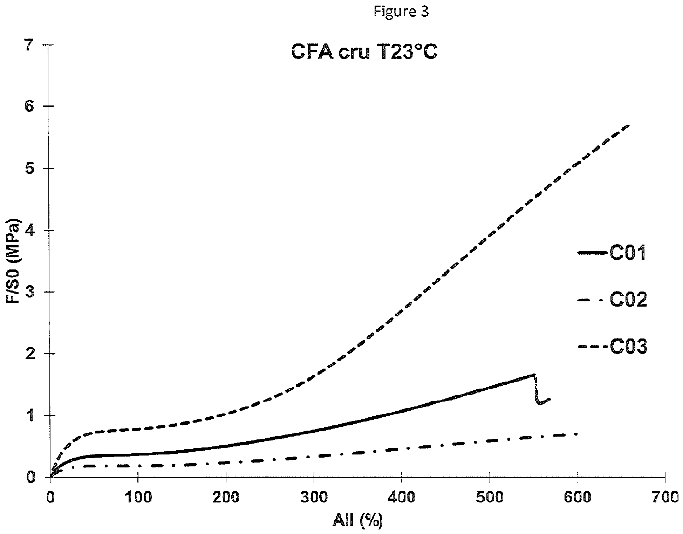

- La figure 3 est un graphique des courbes de contrainte apparente F/So (MPa) en fonction de la déformation (%) relatives à des éprouvettes non réticulées (courbe force allongement à cru ou cfa à cru) qui ont été obtenues selon la méthode décrite dans le paragraphe II.1 et qui sont respectivement constituées :
   i. de composition de caoutchouc non conforme à l'invention (C01), l'élastomère étant le caoutchouc naturel,
   ii. de composition de caoutchouc non conforme à l'invention (C02), l'élastomère étant un polybutadiène stéréorégulier et ne portant pas de groupes pendants de formule (I)
   iii. de composition de caoutchouc conforme à l'invention (C03), l'élastomère étant un polybutadiène stéréorégulier et porteur de groupes pendants de formule (I).

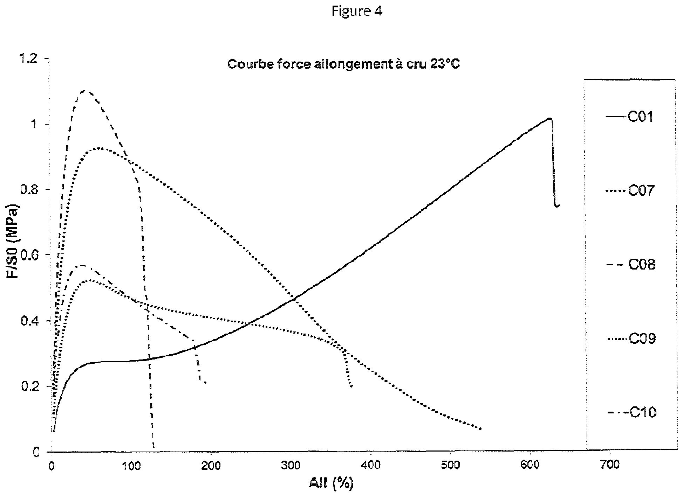

- La figure 4 est un graphique des courbes de contrainte apparente F/So (MPa) en fonction de la déformation (%) relatives à des éprouvettes non réticulées (courbe force allongement à cru ou cfa à cru) qui ont été obtenues selon la méthode décrite dans le paragraphe II.1 et qui sont respectivement constituées :
   i. de compositions de caoutchouc non conformes à l'invention, l'élastomère n'étant pas stéréorégulier et portant des groupes pendants de formule (I)
   ii. de composition de caoutchouc non conforme à l'invention, l'élastomère étant le caoutchouc naturel.

### Il. EXEMPLES DE REALISATION DE L'INVENTION

### 11.1-Mesure et test utilisés : Obtention des courbes force-allongement d'éprouvettes non réticulées :

### 1) Confection de plaques constituées de compositions de caoutchouc non réticulées :

La composition passe dans une calandre dont les cylindres sont à 75° C de manière à être sous la forme d'une feuille de 2,9 mm d'épaisseur. Cette feuille est moulée sous pression dans un moule pendant 10 minutes à 110° C entre deux feuilles de polyester, puis extraite du moule et enfin refroidie à l'air libre. Une plaque de 2,5 mm d'épaisseur est ainsi obtenue.

### 2) Conditionnement des plaques obtenues :

Entre le moment de leur confection et celui de l'essai de traction, chaque plaque est stockée sous atmosphère ambiante pour une durée au moins égale à 5 heures et ne pouvant excéder 8 jours.

### 3) Confection des éprouvettes à partir de ces plaques :

Chaque éprouvette est ensuite immédiatement découpée suivant une forme d'haltère dans l'une des plaques ainsi extraite du moule, de telle sorte qu'elle comporte deux extrémités reliées entre elles par une tige d'épaisseur E = 2,5 mm, de longueur L = 26 mm et de largeur W = 6 mm. La découpe est effectuée de telle manière que la direction longitudinale L de l'éprouvette soit parallèle à la direction du calandrage.

### 4) Essais de traction :

Au moins trois éprouvettes identiques sont testées dans les mêmes conditions pour chacun des essais de traction réalisés.

Chaque essai de traction consiste à soumettre à une traction à vitesse constante chaque éprouvette et à enregistrer l'évolution de la force de traction en fonction du déplacement d'un mors mobile d'une machine de traction de dénomination « INSTRON 4501 ». Cette machine est équipée d'un capteur de force et d'un moyen pour mesurer le déplacement de ce mors mobile. Chaque éprouvette est maintenue dans sa partie la plus large sous une pression de serrage P égale à 2 bars.

Chaque essai de traction est réalisé à température ambiante, dans un laboratoire climatisé à 23°C (+/-2°C) et à 50% (+/-10%) d'humidité. La vitesse de déplacement constante du mors mobile est de 100 mm/minute. Les variations de la force de traction et du déplacement du mors mobile sont enregistrées durant chaque essai.

Pour chaque éprouvette, les paramètres suivants sont calculés :
- Déformation relative α (%) = 100 × D / L (D est le déplacement du mors mobile en mm), mesuré par le capteur de la machine au cours de chaque essai et L = 26 mm est la longueur initiale de l'éprouvette imposée par « l'emporte-pièce » ), et
- Contrainte apparente F/So (MPa), qui représente le rapport de la force (en N) mesurée par le capteur de la machine, sur la section initiale S₀ de l'éprouvette (So = W. E en mm², W = 6 mm étant la largeur imposée par « l'emporte-pièce » et E = 2,5 mm l'épaisseur de l'éprouvette avant la traction).

Pour chaque niveau de déformation relative, on a calculé la moyenne des contraintes correspondantes pour trois éprouvettes identiques, et l'on a tracé ainsi, pour chacune des éprouvettes testées, un graphe contrainte (moyenne sur trois mesures) - déformation.

### 5) Détermination de la microstructure et du taux de fonction des élastomères par résonance magnétique nucléaire (RMN) :

La microstructure est déterminée par RMN ¹H. Le taux molaire de composé oxyde de nitrile greffé est déterminé aussi par analyse RMN. Les échantillons sont solubilisés dans un mélange de disulfure de carbone et de benzène deutéré (CS₂/C₆D₆ (50/50)) dans le but d'obtenir un signal de « lock ». Les spectres sont acquis sur un spectromètre 500 MHz BRUKER équipé d'une « CryoSonde BBFO-zgrad-5 mm ». L'expérience RMN ¹H quantitative, utilise une séquence simple impulsion 30° et un délai de répétition de 5 secondes entre chaque acquisition. Des expériences RMN 2D ont permis de vérifier la nature du motif greffé grâce aux déplacements chimiques des atomes de carbone et de proton.

### II.2-Préparation des compositions de caoutchouc :

Dix compositions de caoutchouc C01 à C10 sont préparées. Leur formulation est donnée dans le tableau 1, la microstructure des élastomères est décrite dans le tableau 2.

Dans le cas des compositions de caoutchouc C01, C02, C04 et C06, on procède pour la fabrication de ces compositions de la manière suivante : on introduit dans un mélangeur interne (taux de remplissage final : environ 70% en volume), dont la température initiale de cuve est d'environ 110°C, l'élastomère, puis la charge renforçante, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques ou pour être utilisées comme armature de renforcement pour pneumatique.

Dans le cas des compositions de caoutchouc C03, C05, C07, C08, C09 et C10, on procède comme mentionné pour les compositions C01, C02, C04 et C06 si ce n'est qu'avant d'introduire la charge renforçante, on introduit le composé 1,3-dipolaire qui est malaxé seul avec l'élastomère pendant 1 à 2 minutes à 110°C, ce qui permet de fonctionnaliser l'élastomère avec des groupes pendants de formule (I) avant d'introduire les autres ingrédients de la composition de caoutchouc. Le taux de composé 1,3-dipolaire introduit dans le mélangeur interne pour fonctionnaliser l'élastomère avant l'introduction des autres ingrédients de la composition de caoutchouc figure dans le tableau 1 et est exprimé en pce. Le taux introduit correspond à un taux molaire de modification de 0.6% mole pour 100 moles des unités de répétition constitutives de l'élastomère fonctionnel.

La composition de caoutchouc C01 est une composition de caoutchouc de référence, conventionnellement utilisée dans une armature de renforcement pour pneumatique, l'élastomère étant le caoutchouc naturel.

Les compositions de caoutchouc C03 et C05 sont des compositions de caoutchouc conformes à l'invention, puisqu'elles contiennent un élastomère fonctionnel contenant plus de 90% en mole d'unité 1,4-cis et une charge renforçante comprenant plus de 50% en masse d'un noir de carbone. L'élastomère stéréorégulier fonctionnel est synthétisé par réaction d'un élastomère aussi stéréorégulier, IR ou BR, et d'un composé 1,3-dipolaire, le 2,4,6-triméthyl-3-((2-méthyl-1*H*-imidazol-1-yl)méthyl)benzo-nitrile oxyde de formule (III-a).

Les compositions de caoutchouc C02 et C04 ne sont pas conformes à l'invention, puisque l'élastomère stéréorégulier, IR ou BR, n'est pas fonctionnel.

Les compositions de caoutchoucs C06 à C10 ne sont pas non plus conformes à l'invention, parce que l'élastomère de la composition de caoutchouc n'est pas stéréorégulier.

### Il.3-Résultats :

Les valeurs des déformations et des contraintes à la rupture des compositions sont résumées dans le tableau 3.

Les figures 2 et 3 et le tableau 3 montrent que les compositions de caoutchouc C03 et C05 conformes à l'invention présentent une contrainte apparente F/So très supérieure à la composition de caoutchouc de référence C01. La présence de groupes pendants de formule (I) sur l'élastomère stéréorégulier permet d'améliorer de façon très significative les propriétés de résistance mécanique à l'état cru des compositions de caoutchouc renforcées majoritairement par du noir de carbone et à base d'un élastomère stéréorégulier synthétique, comme le polyisoprène et le polybutadiène à fort taux d'unités 1,4-cis. Ces résultats permettent d'envisager de remplacer le caoutchouc naturel par un élastomère de synthèse dans des compositions de caoutchouc renforcées majoritairement par du noir de carbone.

Les figures 2 et 3 et le tableau 3 montrent aussi que les compositions de caoutchouc C02 et C04 à base d'élastomère stéréorégulier qui ne porte de groupes pendants de formule (I) présentent une résistance mécanique qui est très inférieure à la composition de caoutchouc de référence C01.

La figure 4 et le tableau 3 montrent que pour les compositions de caoutchouc C07 à C10 non conformes à l'invention qui sont constitués d'élastomères fonctionnels et non stéréoréguliers, les contraintes apparentes F/So à forte déformation, notamment à plus de 400% de déformation, restent très inférieures à celles de la composition de référence C01 et à celles des compositions de caoutchouc conformes à l'invention qui sont constituées d'élastomères stéréoréguliers et fonctionnels.

Ces résultats inattendus montrent que les compositions de caoutchouc à base d'une charge renforçante comprenant majoritairement du noir de carbone et un élastomère à la fois stéréorégulier et porteur de groupes pendants de formule (I) peuvent se substituer aux compositions de caoutchouc à base d'une charge renforçante comprenant majoritairement du noir de carbone et de caoutchouc naturel, notamment dans les cas où les compositions de caoutchouc sont utilisées comme armature de renforcement pour un pneumatique telle qu'une armature de carcasse ou une armature de sommet.

**Tableau 1**

| | non conforme | non conforme | conforme | non conforme | conforme | non conforme | non conforme | non conforme | non conforme | non conforme |
|---|---|---|---|---|---|---|---|---|---|---|
| **composition** | C01 | C02 | C03 | C04 | C05 | C06 | C07 | C08 | C09 | C10 |
| NR (1) | 100 | | | | | | | | | |
| BR1 (2a) | | 100 | 100 | | | | | | | |
| BR2 (2b) | | | | | | | | | | 100 |
| SBR1 (3a) | | | | | | 100 | 100 | | | |
| SBR2 (3b) | | | | | | | | 100 | | |
| IR1 (4a) | | | | 100 | 100 | | | | | |
| IR2 (4b) | | | | | | | | | 100 | |
| Noir de carbone | 65 | 65 | 65 | 65 | 65 | 65 | 65 | 65 | 65 | 65 |
| 6PPD (5) | 2.0 | 2.0 | 2.0 | 2.0 | 2.0 | 2.0 | 2.0 | 2.0 | 2.0 | 2.0 |
| sels de Cobalt | 2.0 | 2.0 | 2.0 | 2.0 | 2.0 | 2.0 | 2.0 | 2.0 | 2.0 | 2.0 |
| Acide stéarique (6) | 0.6 | 0.6 | 0.6 | 0.6 | 0.6 | 0.6 | 0.6 | 0.6 | 0.6 | 0.6 |
| ZnO (7) | 8.0 | 8.0 | 8.0 | 8.0 | 8.0 | 8.0 | 8.0 | 8.0 | 8.0 | 8.0 |
| Soufre | 6 | 6 | 6 | 6 | 6 | 6 | 6 | 6 | 6 | 6 |
| TBBS (8) | 1 | 1 | 1 | 1 | 1 | 1 | 1 | 1 | 1 | 1 |
| composé III-a | | | 2.7 | | 2.3 | | 2.3 | 2.3 | 2.3 | 2.7 |

| | | | | | | | | | | |
|---|---|---|---|---|---|---|---|---|---|---|
| (1) : Caoutchouc naturel ; (2) : Polybutadiène ; (3) : Copolymère styrène-butadiène ; (4) : Polyisoprène ; (5) : N-1,3-diméthylbutyl-N-phényl-para-phenyldiamine (« Santoflex 6-PPD » de la société Flexsys) ; (6) : Stéarine « Pristerene 4931 » de la société Uniquema ; (7) : Oxyde de Zinc de grade industriel - société Umicore ; (8) : N-tert-butyl-2-benzothiazol-sulfénamide (Santocure TBBS de la société Flexsys). | | | | | | | | | | |

**Tableau 2**

| **polymère** | **%mass Styrène / SBR** | **%mass BR1-2/BR** | **%mass BR 1-4 trans / BR** | **%mass BR 1-4 cis / BR** | **Isoprène (% mol)** | | | | **Tg DSC (°C)** |
|---|---|---|---|---|---|---|---|---|---|
| | | | | | **% 1,2** | **% 3,4** | **% trans PI** | **% cis PI** | |
| SBR1 | 26.0 | 25.0 | 46.0 | 28.0 | - | - | - | - | -50 |
| SBR2 | 21.6 | 13.2 | 53.0 | 33.8 | - | - | - | - | -64 |
| IR1 (IR6596) | - | - | - | - | < 0.3 | < 0.5 | < 1.2 | > 98 | -65 |
| IR2 | - | - | - | - | - | 3.8 | 11.4 | 84.8 | -62 |
| BR1 | - | 0.3 | 2.7 | 97.0 | - | - | - | - | -103 |
| BR2 | - | 8.0 | 51.0 | 41.0 | - | - | - | - | -95 |

**Tableau 3**

| **Compositions** | C01 | C02 | C03 | C04 | C05 | C06 | C07 | C08 | C09 | C10 |
|---|---|---|---|---|---|---|---|---|---|---|
| **Propriétés à cru 23°C** | | | | | | | | | | |
| Déformation à la rupture (%) | 617 | 725 | 787 | 1572 | 560 | 314 | 613 | 131 | 403 | 230 |
| Contrainte apparente à la rupture (MPa) | 1.90 | 0.79 | 6.87 | 0.22 | 4.33 | 0.927 | 1 | 1.10 | 0.52 | 0.57 |

## Revendications

1. Composition de caoutchouc à base au moins :
- d'un élastomère fonctionnel, lequel élastomère fonctionnel est un élastomère diénique qui comprend des unités diéniques sous la configuration 1,4-cis et des groupes pendants de formule (I) 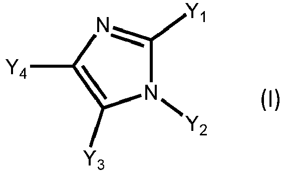 dans laquelle :
les symboles Y₁, Y₂, Y₃ et Y₄, identiques ou différents, représentent un atome ou un groupe d'atomes sachant qu'au moins un des symboles désigne un rattachement à une unité diénique de l'élastomère,
les unités diéniques sous la configuration 1,4-cis représentant au moins 90% en mole des unités diéniques de l'élastomère fonctionnel,
- d'une charge renforçante qui comprend un noir de carbone, le noir de carbone représentant plus de 50% en masse de la charge renforçante.

2. Composition de caoutchouc selon la revendication 1 dans laquelle les unités diéniques sous la configuration 1,4-cis représentant au moins 95% en mole des unités diéniques de l'élastomère fonctionnel.

3. Composition de caoutchouc selon l'une quelconque des revendications 1 à 2 dans laquelle le taux de groupes pendants de formule (I) dans l'élastomère fonctionnel est supérieur à 0% et inférieur ou égal à 3% en moles des unités de répétition constitutives de l'élastomère fonctionnel.

4. Composition de caoutchouc selon l'une quelconque des revendications 1 à 3 dans laquelle Y₂ désigne le rattachement à une unité diénique de l'élastomère, Y₃ et Y₄ sont chacun un atome d'hydrogène et Y₁ représente un atome d'hydrogène ou une chaîne carbonée pouvant contenir au moins un hétéroatome.

5. Composition de caoutchouc selon l'une quelconque des revendications 1 à 4 dans laquelle l'élastomère fonctionnel est différent d'un caoutchouc naturel modifié.

6. Composition de caoutchouc selon l'une quelconque des revendications 1 à 5 dans laquelle les unités diéniques sont des unités du 1,3-butadiène ou des unités de l'isoprène.

7. Composition de caoutchouc selon l'une quelconque des revendications 1 à 6 dans laquelle l'élastomère fonctionnel est un élastomère diénique dont une partie des unités diéniques sont modifiées par greffage d'un composé, composé C, qui contient un groupe réactif vis-à-vis de doubles liaisons carbone carbone et un groupe de formule (II) 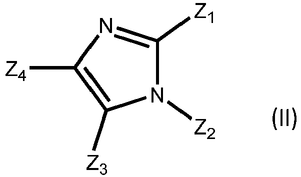 dans laquelle les symboles Z₁, Z₂, Z₃ et Z₄ , identiques ou différents, représentent un atome ou un groupe d'atomes sachant qu'au moins un des symboles désigne un rattachement au groupe réactif.

8. Composition de caoutchouc selon la revendication 7 dans laquelle Z₂ désigne le rattachement au groupe réactif, Z₃ et Z₄ représentent chacun un atome d'hydrogène et Z₁ représente un atome d'hydrogène ou une chaîne carbonée pouvant contenir au moins un hétéroatome, préférentiellement un groupe alkyle.

9. Composition de caoutchouc selon l'une quelconque des revendications 7 à 8 dans laquelle le composé C est un composé 1,3-dipolaire, composé qui contient un seul dipôle et le groupe de formule (II), le composé 1,3-dipolaire étant un monooxyde de nitrile aromatique, composé aromatique qui contient un seul dipôle oxyde de nitrile et un noyau benzénique, lequel noyau benzénique est substitué par le dipôle oxyde de nitrile.

10. Composition de caoutchouc selon l'une quelconque des revendications 1 à 9 dans laquelle l'élastomère fonctionnel est obtenu par modification d'un élastomère diénique de synthèse, de préférence un polybutadiène ou un polyisoprène de synthèse.

11. Composition de caoutchouc selon l'une quelconque des revendications 1 à 10 dans laquelle le noir de carbone représente plus de 90% en masse de la charge renforçante.

12. Composition de caoutchouc selon l'une quelconque des revendications 1 à 11 dans laquelle le noir de carbone représente de 30 à 80 pce.

13. Composite comportant une composition de caoutchouc définie à l'une quelconque des revendications 1 à 12 et au moins un élément de renforcement enrobé dans la composition de caoutchouc.

14. Article semi-fini pour pneumatique, lequel article semi-fini comporte une composition de caoutchouc définie à l'une quelconque des revendications 1 à 12 ou un composite défini à la revendication 13, lequel article semi-fini est une armature de renforcement pour pneumatique.

15. Pneumatique comprenant une composition de caoutchouc définie à l'une quelconque des revendications 1 à 12, un composite défini à la revendication 13 ou un article semi-fini défini à la revendication 14.

## Patentansprüche

1. Kautschukzusammensetzung auf Basis von mindestens:
- einem funktionellen Elastomer, wobei es sich bei dem funktionellen Elastomer um ein Dienelastomer handelt, das Dieneinheiten in der cis-1,4-Konfiguration und seitenständige Gruppen der Formel (I) 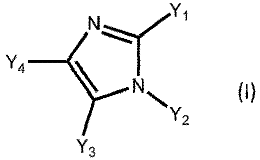
umfasst, wobei:
die Symbole Y₂, Y₂, Y₃ und Y₄ gleich oder verschieden sind und für ein Atom oder eine Gruppe von Atomen stehen, wobei mindestens eines der Symbole eine Bindung an eine Dieneinheiten des Elastomers bezeichnet,
wobei die Dieneinheiten in der cis-1,4-Konfiguration mindestens 90 Mol-% der Dieneinheiten des funktionellen Elastomers ausmachen,
- einen verstärkenden Füllstoff, der einen Ruß umfasst, wobei der Ruß mehr als 50 Massen-% des verstärkenden Füllstoffs ausmacht.

2. Kautschukzusammensetzung nach Anspruch 1, wobei die Dieneinheiten in der cis-1,4-Konfiguration mindestens 95 Mol-% der Dieneinheiten des funktionellen Elastomers ausmachen.

3. Kautschukzusammensetzung nach einem der Ansprüche 1 bis 2, wobei der Gehalt an seitenständigen Gruppen der Formel (I) in dem funktionellen Elastomer größer als 0 Mol-% und kleiner als oder gleich 3 Mol-% der Wiederholungseinheiten, aus denen das funktionelle Elastomer aufgebaut ist, ist.

4. Kautschukzusammensetzung nach einem der Ansprüche 1 bis 3, wobei Y₂ für eine Bindung an eine Dieneinheit des Elastomers steht, Y₃ und Y₄ jeweils für ein Wasserstoffatom stehen und Y₂ für ein Wasserstoffatom oder eine Kohlenstoffkette, die mindestens ein Heteroatom enthalten kann, steht.

5. Kautschukzusammensetzung nach einem der Ansprüche 1 bis 4, wobei das funktionelle Elastomer von einem modifizierten Naturkautschuk verschieden ist.

6. Kautschukzusammensetzung nach einem der Ansprüche 1 bis 5, wobei es sich bei den Dieneinheiten um 1,3-Butadien-Einheiten oder Isopren-Einheiten handelt.

7. Kautschukzusammensetzung nach einem der Ansprüche 1 bis 6, wobei es sich bei dem funktionellen Elastomer um ein Dienelastomer handelt, bei dem ein Teil der Dieneinheiten durch Aufpfropfen einer Verbindung, Verbindung C, die eine gegenüber Kohlenstoff-Kohlenstoff-Doppelbindungen reaktive Gruppe und eine Gruppe der Formel (II) 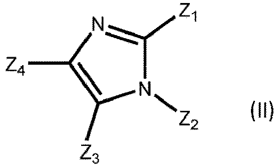 enthält, modifiziert ist,
wobei die Symbole Z₁, Z₂, Z₃ und Z₄ gleich oder verschieden sind und für ein Atom oder eine Gruppe von Atomen stehen, wobei mindestens eines der Symbole eine Bindung an die reaktive Gruppe bezeichnet.

8. Kautschukzusammensetzung nach Anspruch 7, wobei Z₂ für eine Bindung an die reaktive Gruppe steht, Z₃ und Z₄ jeweils für ein Wasserstoffatom stehen und Z₂ für ein Wasserstoffatom oder eine Kohlenstoffkette, die mindestens ein Heteroatom enthalten kann, vorzugsweise eine Alkylgruppe, steht.

9. Kautschukzusammensetzung nach einem der Ansprüche 7 bis 8, wobei es sich bei der Verbindung C um eine 1,3-dipolare Verbindung handelt, die einen einzigen Dipol und die Gruppe der Formel (II) umfasst, wobei es sich bei der 1,3-dipolaren Verbindung um ein aromatisches Nitrilmonooxid handelt, bei welchem es sich um eine aromatische Verbindung handelt, die einen einzigen Nitriloxid-Dipol und einen Benzolkern umfasst, wobei der Benzolkern durch den Nitriloxid-Dipol substituiert ist.

10. Kautschukzusammensetzung nach einem der Ansprüche 1 bis 9, wobei das funktionelle Elastomer durch Modifizierung eines synthetischen Dienelastomers, vorzugsweise eines Polybutadiens oder eines synthetischen Polyisoprens, erhalten worden ist.

11. Kautschukzusammensetzung nach einem der Ansprüche 1 bis 10, wobei der Ruß mehr als 90 Massen-% des verstärkenden Füllstoffs ausmacht.

12. Kautschukzusammensetzung nach einem der Ansprüche 1 bis 11, wobei der Ruß 30 bis 80 phe ausmacht.

13. Verbundwerkstoff, umfassend eine Kautschukzusammensetzung gemäß einem der Ansprüche 1 bis 12 und mindestens ein mit der Kautschukzusammensetzung umhülltes Verstärkungselement.

14. Halbzeug für Reifen, wobei das Halbzeug eine Kautschukzusammensetzung gemäß einem der Ansprüche 1 bis 12 oder einen Verbundwerkstoff gemäß Anspruch 13 erhält, wobei es sich bei dem Halbzeug um eine Verstärkungsbewehrung für Reifen handelt.

15. Reifen, umfassend eine Kautschukzusammensetzung gemäß einem der Ansprüche 1 bis 12, einen Verbundwerkstoff gemäß Anspruch 13 oder ein Halbzeug gemäß Anspruch 14.

## Claims

1. Rubber composition based at least:
- on a functional elastomer, which functional elastomer is a diene elastomer which comprises diene units in the cis-1,4 configuration and pendant groups of formula (I) 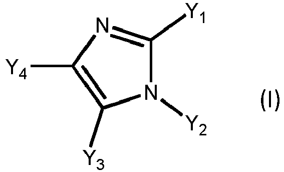 in which:
the Y₁, Y₂, Y₃ and Y₄ symbols, which are identical or different, represent an atom or a group of atoms, knowing that at least one of the symbols denotes an attachment to a diene unit of the elastomer,
the diene units in the cis-1,4 configuration representing at least 90 mol% of the diene units of the functional elastomer,
- a reinforcing filler which comprises a carbon black, the carbon black representing more than 50% by weight of the reinforcing filler.

2. Rubber composition according to Claim 1, in which the diene units in the cis-1,4 configuration represent at least 95 mol% of the diene units of the functional elastomer.

3. Rubber composition according to either one of Claims 1 and 2, in which the content of pendant groups of formula (I) in the functional elastomer is greater than 0 mol% and less than or equal to 3 mol% of the constitutional repeating units of the functional elastomer.

4. Rubber composition according to any one of Claims 1 to 3, in which Y₂ denotes the attachment to a diene unit of the elastomer, Y₃ and Y₄ are each a hydrogen atom and Y₁represents a hydrogen atom or a carbon chain which may contain at least one heteroatom.

5. Rubber composition according to any one of Claims 1 to 4, in which the functional elastomer is other than a modified natural rubber.

6. Rubber composition according to any one of Claims 1 to 5, in which the diene units are 1,3-butadiene units or isoprene units.

7. Rubber composition according to any one of Claims 1 to 6, in which the functional elastomer is a diene elastomer, a portion of the diene units of which are modified by grafting of a compound, compound C, which contains a group that is reactive with respect to carbon-carbon double bonds and a group of formula (II) 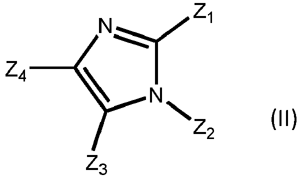 in which the Z₁, Z₂, Z₃ and Z₄ symbols, which are identical or different, represent an atom or a group of atoms, knowing that at least one of the symbols denotes an attachment to the reactive group.

8. Rubber composition according to Claim 7, in which Z₂ denotes the attachment to the reactive group, Z₃ and Z₄ each represent a hydrogen atom and Z₁ represents a hydrogen atom or a carbon chain which may contain at least one heteroatom.

9. Rubber composition according to any one of Claims 7 to 8, in which the compound C is a 1,3-dipolarcompound, which compound contains a single dipole and the group of formula (II), the 1,3-dipolar compound being an aromatic nitrile monoxide, which aromatic compound contains a single nitrile oxide dipole and a benzene ring, which benzene ring is substituted by the nitrile oxide dipole.

10. Rubber composition according to any one of Claims 1 to 9, in which the functional elastomer is obtained by modification of a synthetic diene elastomer, preferably a polybutadiene or a synthetic polyisoprene.

11. Rubber composition according to any one of Claims 1 to 10, in which the carbon black represents more than 90% by weight of the reinforcing filler.

12. Rubber composition according to any one of Claims 1 to 11, in which the carbon black represents from 30 to 80 phr.

13. Composite comprising a rubber composition defined in any one of Claims 1 to 12 and at least one reinforcing element coated in the rubber composition.

14. Semi-finished article for a tyre, which semi-finished article comprises a rubber composition defined in any one of Claims 1 to 12 or a composite defined in Claim 13, which semi-finished article is a reinforcement for tyres.

15. Tyre comprising a rubber composition defined in any one of Claims 1 to 12, a composite defined in Claim 13 or a semi-finished article defined in Claim 14.
